(19) Europäisches Patentamt
European Patent Office
Office européen des brevets

(11) **EP 3 609 093 A1**

(12) **EUROPEAN PATENT APPLICATION**

(43) Date of publication:
**12.02.2020 Bulletin 2020/07**

(51) Int Cl.:
**H04B 7/14** *(2006.01)*

(21) Application number: **18000665.2**

(22) Date of filing: **09.08.2018**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **FRAUNHOFER-GESELLSCHAFT zur Förderung der angewandten Forschung e.V.**
**80686 München (DE)**

(72) Inventors:
• **HADASCHIK, Niels**
**81827 München (DE)**
• **KRISHNAMOORTHY, Aravindh**
**8190425 Nürnberg (DE)**

(74) Representative: **Pfitzner, Hannes et al**
**Schoppe, Zimmermann, Stöckeler**
**Zinkler, Schenk & Partner mbB**
**Patentanwälte**
**Radlkoferstraße 2**
**81373 München (DE)**

(54) **RELAY AND RECEIVING UNIT**

(57) A relay for forwarding a signal stream comprising a receiver, a processor and a transmitter. The receiver is configured to receive an inbound signal comprising the signal stream. The processor is configured to imprint a pattern to the inbound signal to generate a convoluted signal. The transmitter is configured to transmit the convoluted signal as outbound signal. The pattern is assigned to an ID of the relay.

100

Fig. 1a

**Description**

Embodiments of the present invention refer to a relay for forwarding a signal stream, a method for forwarding a signal stream and a corresponding computer program. Further embodiments refer to a detecting receiving unit a user equipment or a base station and to a method for receiving a signal stream and to a corresponding computer program. Another embodiment refers to a system comprising the relay and at least one detecting receiving unit. The further embodiment refers to the usage of a relay as beacon station.

Relays in wireless communication aim at increasing the channel quality for remote users or users with severely blocked (LOS) propagation channels, e.g. users located deep indoors, behind metallically shielded windows, in cellars, underground parking, tunnel, street canyons, etc. resulting in large propagation losses. The main principle of these relays is to mitigate these propagation losses. Furthermore, deploying multiple relays may also result in an increased MIMO channel rank thereby resulting in an increased number of spatial channels.

Thus, relays offer additional channel paths with independent propagation (or LOS) delays that may serve as an additional (to the direct channel between UE and gNB) input to a positioning engine. In order to reduce the algorithm and deployment complexity - i.e. the need for calibration or (machine) learning -, the individual relay-receiver paths respectively the relay must be identifiable. This requires separation of signals and delays resulting from relays and gNB at the receiver (if using the same frequency band) for positioning purpose (for communication the knowledge of the relaying device is not needed as such). Then, the identification of the relay enables to associate the estimated delay (or the estimated pseudo-range) with one relay with known position. The distance of the relay and the base station may easily be determined in advance either by using known positions of base stations and relays or by independent round trip time measurements (apart from the joint signaling in the mobile network). In principle, also the distance to the relay can be measured with RTT measurements between relay and the receiver UE and the gNB. However, this cannot yield a relay position as such, as for that multiple receiver measurements are required (multiple measurements from multiple positions). If the relay can connect to multiple basestations, multiple transmit-receive points (TRP), it can compute its position.

Furthermore, such an intelligent relay mode for direct response to the request of the initiating user equipment UE or base station gNB would add significant complexity to the relay. Therefore, there is the need for an improved approach.

It is an objective to provide a concept for a communication system or for entities of a communication system enabling to improve the positing engine, especially the positioning engine for the user equipment.

This objective is solved by the subject-matter of the independent claims.

An embodiment provides a relay forwarding a signal stream, the relay having an ID. The relay comprises a receiver, a processor and a transmitter. The receiver is configured to receive an inbound signal comprising the signal stream. The processor is configured to process the inbound signal, namely to imprint a pattern, e.g., a known pattern, to the inbound signal to generate a convoluted or watermarked signal. The pattern is assigned to the ID of the relay (similar to the physical cell ID (PCI) in LTE). The transmitter is configured to transmit the convoluted or watermarked signal as outbound signal.

Another embodiment provides the counterpart to the relay, e.g., the user equipment (preferred) or the base station comprising a detecting receiving unit. According to an embodiment, the detecting receiving unit comprises a receiver configured to receive an inbound signal comprising a signal stream. This inbound signal is received from the relay, i.e., the inbound signal of the perspective of the detecting receiving unit corresponds to the outbound signal of the relay. Consequently, a pattern was imprinted to the inbound signal, wherein the pattern is assigned to the ID of the relay. The detecting receiving unit further comprises a pattern decorrelated configured to analyze the inbound signal so as to decorrelate the imprinted pattern. The pattern decorrelator is, thus, configured to identify the relay based on the detected/decorrelated imprinted pattern.

Due to the identification of the relay by means of the imprinted pattern assigned to the ID, the propagation path of the transmit signal (forwarded by the relay) can be determined. Under the knowledge of the propagation path, the time of transmission can be used to determine the position of the user equipment/receiving unit.

Consequently, teachings disclosed herein are based on the principle, that a pattern imprinted to the forwarded signal by the relay can be used to identify the relay which has forwarded the signal. Advantageously, this identification of the one or more relays can be performed within a cell based on the described artificially imprinting of channel characteristics on the forwarded/relayed signal. As described, this has the background that especially non-blind locating algorithms depend on identifying the propagation path and with it the (applied) relay itself at a receiver. Here, it should be noted, that the receiver is commonly the receiver of the user equipment, but may also be the receiver of the base station. From the position of the identified relay, the receiver position (or in the case of the base station receiver, the transmitter position) can be extracted using differences. According to embodiments, this principle is considered for amplify and forward (AF) relays, but can also be extended to decode and forward (DF) relays.

Below, optional features of the relay will be discussed.

The processor may be configured to imprint the pattern by convoluting the inbound signal in accordance to a predefined delay and a predefined sequence. The sequence together with the delay determines the pattern. This embodiment is beneficial, since this procedure may be applied to non-decoded signals. according to embodiments, the processor comprises a relay channel filter for imprinting the pattern. This relay channel filter comprises a delay chain and a combiner path. The delay chain may comprise a plurality of delay elements (which may be, for example, arranged in series) and a combiner path (each having a plurality of combiner/sum elements). Each delay element may be configured to delay the inbound signal, wherein the combiner path is configured to combine the delayed elements and to output as a result the convoluted signal. According to embodiments, the combiner path comprises a plurality of combine elements/sum elements each coupled (directly or indirectly) to an output of the delay elements for combining the delayed signals to the convoluted signal. These combiner elements are referred to as second combiner elements belonging to a second plurality. According to a further embodiment, the combiner path may comprise a first plurality of first combiner elements. The first combiner elements may be coupled to respective outputs to the delay elements and configured to combine the delayed signals with a sequence or part of the sequence. It should be noted that the combiner path may also be connected to a non-delayed output of the delay line, so that a non-delayed version of the inbound signal may be processed together with the delayed signals. Regarding the delay elements, it should be noted that all delay elements may be of the same time or may vary with regard to its delay characteristic or may comprise a double delay element so as to generate a spacing by outputting the signals.

According to an alternative variant of the processor for imprinting the pattern, the processor may be configured to imprint the pattern by adding a watermark to the inbound signal. For example, the watermark comprises a bitmap, a low power complex valued bitmap, which is periodically inserted into the forwarded inbound signal. Furthermore, the watermarking may be performed by the following formula:

$$y_n(t) = A_n x_n(t) + B_n c_n(t),$$

wherein $y_n(t)$ is the watermarked signal, $x_n(t)$ is the inbound signal, $c_n(t)$ is the watermark, $A_n$ is an amplification factor for the inbound signal $x_n(t)$ and $B_n$ is an amplification factor for the watermark $c_n(t)$. Alternatively the formula $y_n(k,m) = A_n x_n(k,m) + B_n c_n(k,m)$, may be used, wherein $y_n(k,m)$ is the convoluted or watermarked signal, $x_n(k,m)$ is the inbound signal, $c_n(k,m)$ is the watermark, $A_n$ is an amplification factor for the inbound signal $y_n(k,m)$ and $B_n$ is an amplification factor for the watermark $c_n(t)$. $n$ is the numeric ID of one of the $N$ relays, $k$ is a discrete frequency or subcarrier and $m$ is symbol in a time domain.

According to a further embodiment, the watermarking may comprise inserting a phase jitter or changing the phase. For example, the phase may be changed by phase angle $\phi_l = \pm \phi_{ch} \ll \pi$.

According to further embodiments, the watermark may be a clocked watermark sequence, e.g., according to the following formula:

$$c_l = e^{j\phi_l} \text{ with } e \ll \pi.$$

From another, more general point of view this watermark may be described by: $A_n d_n(t) x_n(t)$ with $d_n(t) = \exp(j\phi_n)$. Here, $x_n(t)$ is the inbound signal and $A_n$ an amplification factor for the inbound signal $x_n(t)$.

According to embodiments the relay may be configured to detect a transmitted PRS-signal or to analyze the signal stream regarding the PRS-signal so as to determine a position of the PRS. Alternatively, the relay may be configured to just imprint the pattern to the PRS-signal.

Below, optional features of the receiver unit may be discussed:

Regarding the receiving, it should be noted, that the pattern which the pattern decorrelator searches is a known pattern. For searching the pattern, the pattern decorrelator may, according to embodiments, perform a demodulation of a time domain sequence of the inbound signal and correlates the results of the demodulation with different hypothesis $c_l^{(v)}$ for the v relays in order to detect the imprinted pattern. Alternatively, the decorrelator may perform a search for periodically repeated pattern/watermark. Alternatively, the pattern detection may be based on an oblique projection. Independent from the detection method, the decorrelator may, according to embodiments, be configured to identify the propagation path of the signal forwarded by the relay, i.e., the signal received as inbound signal from the relay.

According to a further embodiment, the detecting receiving unit comprises a receiving time estimator which is configured to estimate the transmission time, especially to the transmission time between the relay and the receiving unit. Here, it separates this transmission time of the last section from the entire transmission time of the signal forwarded by the relay, e.g., from the base station to the user equipment which comprises the receiving unit. This separating may be performed using the knowledge regarding the identified relay or regarding an identified propagation path of the signal forwarded by the relay (and reserved as inbound signal from the relay). This identification of the propagation path may, for example, be performed by the decorrelator, which identifies the propagation path using the knowledge regarding the identified relay.

According to a preferred embodiment, the detecting receiving unit comprises a position detector. The position detector uses the determined transmission time (between the one or more relays to the respective receiving unit) for determining a position of the receiving unit. Here, the position detector may also use a knowledge regarding the position(s) of the one or more relays.

A further embodiment provides a system comprising at least one relay (but preferably a plurality of relays) and at least one detecting receiving unit (but preferably at least two detecting receiving units, namely one for the user equipment and one for the base station. According to a preferred variant, the system comprises two relays for forwarding signals from a base station (part of the system) to a user equipment (also part of a system). According to a further embodiment, the above-discussed relay may be used as TBS beacon station, e.g., for enabling positioning within a building.

The above-described embodiments of the two aspects (relay aspect and detecting receiving unit aspect) have been discussed in context of an apparatus. However, the invention may also be realized as a method or a computer implemented method. Therefore, an embodiment provides a method for forwarding a signal stream using a relay having an ID. The method comprises the basic steps:

- receiving an inbound signal comprising a signal stream;
- imprinting a pattern to the inbound signal to generate a convoluted or watermarked signal; and
- transmitting the convoluted or watermarked signal as outbound signal.

Here, the pattern is assigned to an ID of the relay. A further embodiment provides a method for receiving the signal stream, e.g., at a base station or a user equipment. Here, the method comprises the basic steps:

- receiving an inbound signal comprising the signal stream from a relay, wherein a pattern was imprinted to the inbound signal and wherein the pattern is assigned to an ID of the relay;
- analyzing the inbound signal so as to decorrelate and detect the imprinted pattern, and
- identifying the relay using the detected imprinted pattern assigned to the ID of the relay.

As mentioned above, the methods may be computer implemented. Therefore, another embodiment provides a computer program having a program code for performing the methods or at least one of the method or at least one method step.

If multiple antennas are available at the mobile receiver, beamforming supports the separation of the signals received via the at least two relays and the combination and association of the relative angles of arrivals with the relay at hand supports the positioning task.

Embodiments will subsequently be discussed referring the enclosed figures, wherein:

Fig. 1a          schematically shows a system comprising a relay, a base station and user equipment according to an embodiment;

Fig. 1b          schematically shows a relay according to an embodiment;

Fig. 1c          schematically shows an entity, here a user equipment comprising a detecting receiving unit;

Figs. 2a and 2b  schematically show a simplified system setup and a signal propagation path for discussing transmission times, e.g., used for a position detection according to embodiments;

Figs. 3a to 3c   shows schematic block diagrams of relay channel filters according to embodiments;

Fig. 4           shows a schematic block diagram of a multi-relay download link according to embodiments;

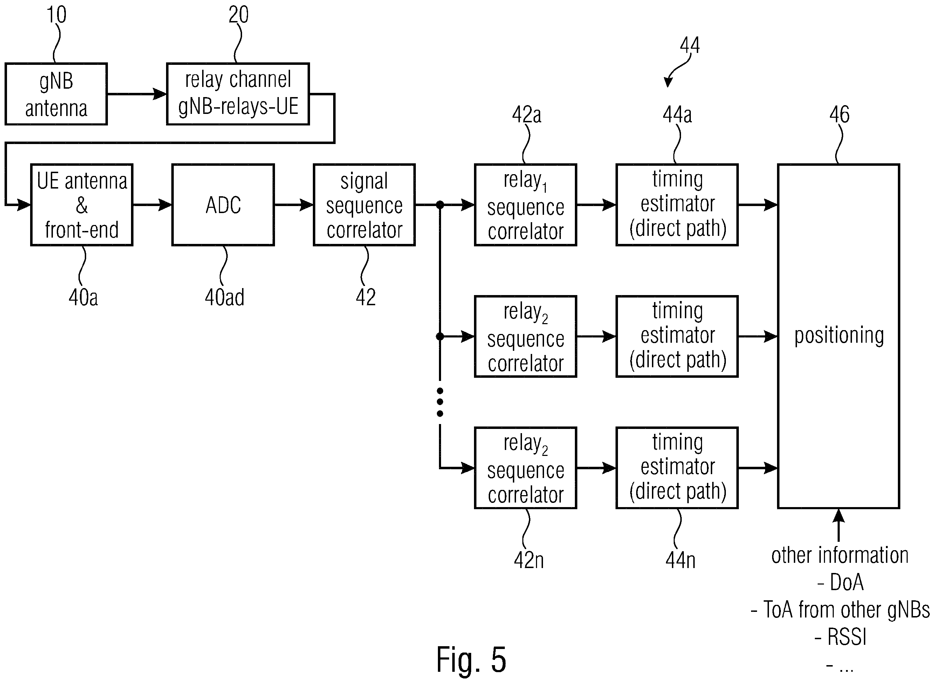

Fig. 5           shows a schematic receiver implementation for a relay signal separation according to an embodiment;

Figs. 6a to 6c   show schematic block diagrams for discussing the principle of watermarking according to embodiments;

Fig. 7           shows a schematic block diagram for illustrating the process of receiving a signal according to an embodiment; and

Fig. 8a and 8b      incorporates schematically the association of the angles of arrivals with the relays and the support of the positioning

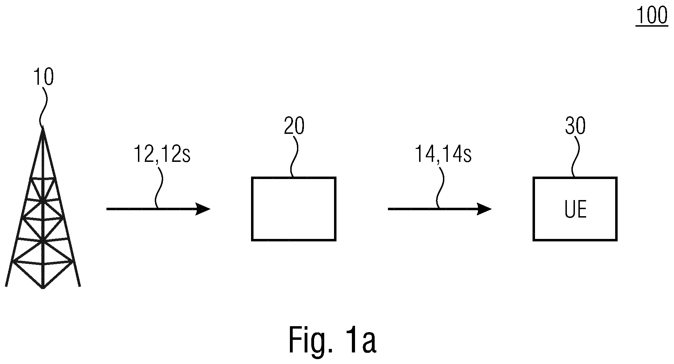

Below, embodiments of the present invention will subsequently be discussed referring to the figures. Here, identical reference numerals are provided to elements having identical or similar function, so that the description thereof is mutually applicable and interchangeable. Fig. 1a shows a communication system 100 having a base station 10 for transmitting data 12 to a user equipment 30, e.g., a smart phone. Furthermore, the communication system 100 comprises a relay 20 having the purpose to forward the transmit data 12 as forwarded data 14 to the user equipment.

The base station 10 may be a cellular base station according a recent communication standard, e.g., LTE or 5G and configured to transmit the signal stream 12, using a radio signal having a frequency of, for example, 5 GHz. It should be noted that such signals can carry the signal stream 12 and, furthermore, can be used to determine a position of the respective receiver receiving the signal stream 12 by evaluating the transmission time.

Here, the signal stream 12 is not directly transmitted to the user equipment 30, but forwarded by the relay 20 as forwarded signal stream 14. For example, in case of a MIMO approach, the base station 10 may perform beamforming of the signal 12s to the relay 20, thus separating the relays and the signals spatially. From the relay's point of view, same receives an inbound signal 12s carrying the signal stream 12 and forwards this signal stream as forwarded signal stream 14 using an outbound signal 14s. This outbound signal 14s is transmitted to the user equipment 30.

Since the relay 20 is typically not arranged on the direct line of sight between the base station 10 and the user equipment 30 and since it might delay the forwarded signal, the transmission time of the signal 12s + 14s is changed. This transmission time change may have an influence to the position detection based on evaluating the transmission time which is typically performed by the user equipment 30. In order to enable to correct this influence of forwarding the signal, the user equipment 30 or, in general, the receiving having a position detector has to determine the circumstances for forwarding the signal 12s + 14s. Here, it is important to enable an identification of the relay 20. This plays a significant role in case there are a plurality of relays 20 for forwarding signals (not shown).

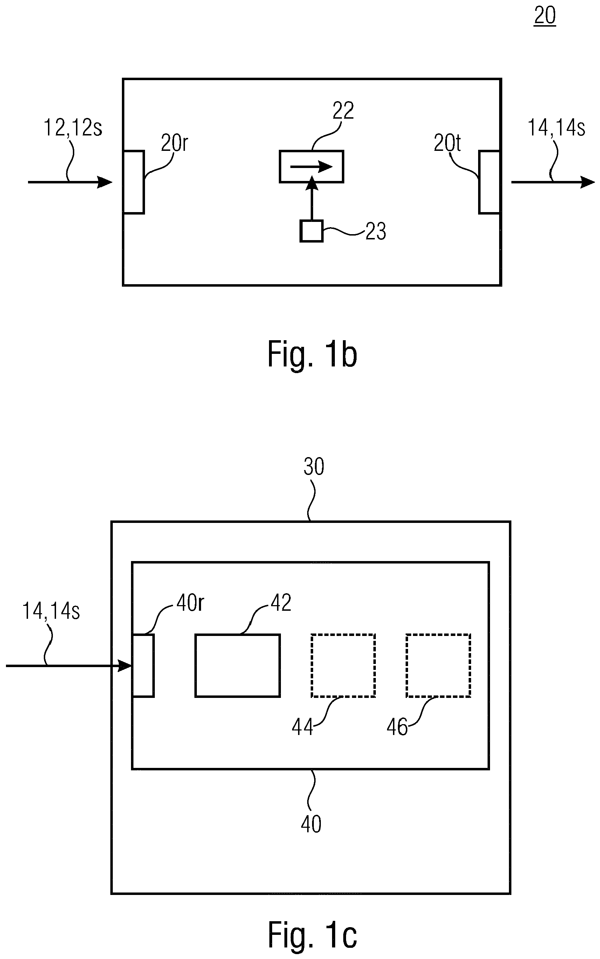

With respect to Fig. 1b an approach for the relay 20 will be discussed enabling to imprint a pattern to the forwarded signal 14s, such that by use of the pattern where detecting receiving unit, e.g., the receiving unit of the user equipment 30 can identify the relay 20. Under the knowledge of the relay 20 which has forwarded the signal 12s + 14s, the receiving unit can determine the propagation path of the signal 12s + 14s.

Fig. 1b shows the relay 20 having a receiver 20r, e.g., part of a first transceiver and a transmitter 20t, e.g., part of a second transceiver. The receiver 20r is configured to receive the inbound signal 12s, while the transmitter 20t is configured to transmit the outbound signal 14s. In order to decouple input 12s and output 14s signals, e.g., in case half duplex transceivers, a converting of the output signals 14s to an orthogonal resource may be performed. The orthogonal resource may be separated spatially (i.e., using a second antenna with the decoupled coverage area/space), in time (delay line) or in spectrum (frequency conversion). It should be noted that according to further embodiments, the receiver 20r and the transmitter 20t may be implemented as a common transceiver, which, for example receives and transmits the signals 12s and 14s, e.g., using half duplex mode.

According to a conventional approach of a relay, the inbound signal 12s is forwarded as output signal 14s, without processing the signal 12s or the signal stream 12. This principle is known as amplify and forward mode, however, does not enable to identify the relay 20 which has performed the amplify and forward. An alternative approach is the so-called decode and forward according to which the signal stream 12 is extracted from the signal 12s and embedded into the outbound signal 14s. However, typically, the conventional decode and forward concept does not embed information for identifying the relay 20.

In order to enable the identification, an information regarding the ID of the relay 20 should be embedded into to the outbound signal 14s. In order to perform this, the relay 20 comprises a processor 22 which is connected to the receiver 20r and to the transmitter 20t. The processor 20 imprints a pattern 23 to the inbound signal 12s. This pattern 23 is assigned to the ID of the relay 20. Furthermore, the processor outputs this convoluted or watermarked signal (i.e., the inbound signal 12s having the imprinted pattern 23), to the transmitter 20t, such that same can forward the convoluted or watermarked signal as outbound signal 14s.

It should be noted that the imprinting of the pattern may be performed in the amplified and forward (AF) mode or within the decode and forward (DF) mode. Here, it should be noted that this approach is mainly considered for AF relays, since these are more cost efficient due to its less complexity.

For imprinting the pattern, there are a plurality of alternatives: according to a first alternative, the pattern is imprinted by using a so-called relay channel filter performing a delay and a convoluting of the inbound signal 12s with sequence (assigned to the ID). This means that the processor 22 emulates a dedicated channel of a defined delay and sequence (defined impulse response) within the relay 20 by performing convolution with the defined impulse response. The result is that the processor 22 imprints a virtual channel on the forwarded data.

According to a second alternative, a watermarking may be used. Such watermarks are signals weak in power and overlaid, (i.e., superposed) on the transmitted signal 14s. For example, DVB-T uses such watermarks for identifying the transmitter stations. Such watermarks can be readout in the receiver 30 after having decoded (subtracted) the signal 14s of the signal stream 14 (and some averaging). It should be noted that this watermarking can be used for the AF mode and the DF mode as well. For example, the processor 22 performing watermarking may encode own information in the bitstream. The DF relays can reuse the same (time-frequency) resources, while still inherently encoding the ID in the signal stream. Thus, a DF relay has higher flexibility in generating the relaying signal, a DF relay (encoding own cell ID in the data bitstream) can indicate the choice of an own specified reference sequence, e.g., according to an own like described in the LTE standard using the positioning reference sequences (PRS) for different time receive points (TRPs) of an eNB (for LTE or gNB for 5G/NR) to be employed for positioning.

The user equipment 30 extracts the pattern, e.g., the defined impulse response pattern (or the watermarking) to find out which relay 20 has forwarded the signal stream 12/14 using the signal 14s.

As illustrated by Fig. 1c, the user equipment 30 comprises a receiving unit 40. This receiving unit 40 comprises a receiver 40r configured to receive the inbound signal 14s carrying the signal stream 14. The receiving unit 40 further comprises a decorrelator 42 configured to analyze the inbound signal 40s in order to determine the (known) pattern 23 imprinted to the inbound signal 40s. The pattern decorrelator 42 decorrelates the imprinted pattern and can, based on the decorrelated/detected imprinted pattern, identify the relay. For example, the decorrelator 42 may be configured to determine a defined impulse response (having a defined delay and a defined sequence) or a watermark within the signal 14s.

Based on information regarding the used relay, it can, according to embodiments, determine the propagation path. The propagation path is an important knowledge for the positioning engine 46 of the user equipment 30 or for an entity 44 evaluating the transmission time. The entity 44 is, according to embodiments, part of the receiving unit 14. The time estimator 44 is configured to evaluate the inbound signal 40s in order to estimate the transmission time, especially the transmission time between the relay 20 and the receiving unit 40. Here, it separates the transmission time between the relay 20 and the receiving unit 30 from the entire transmission line of the propagation path.

This determined transmission time enables to calculate the position of the user equipment 30, the receiving unit 40, respectively. This position determination is performed by the positioning engine 46.

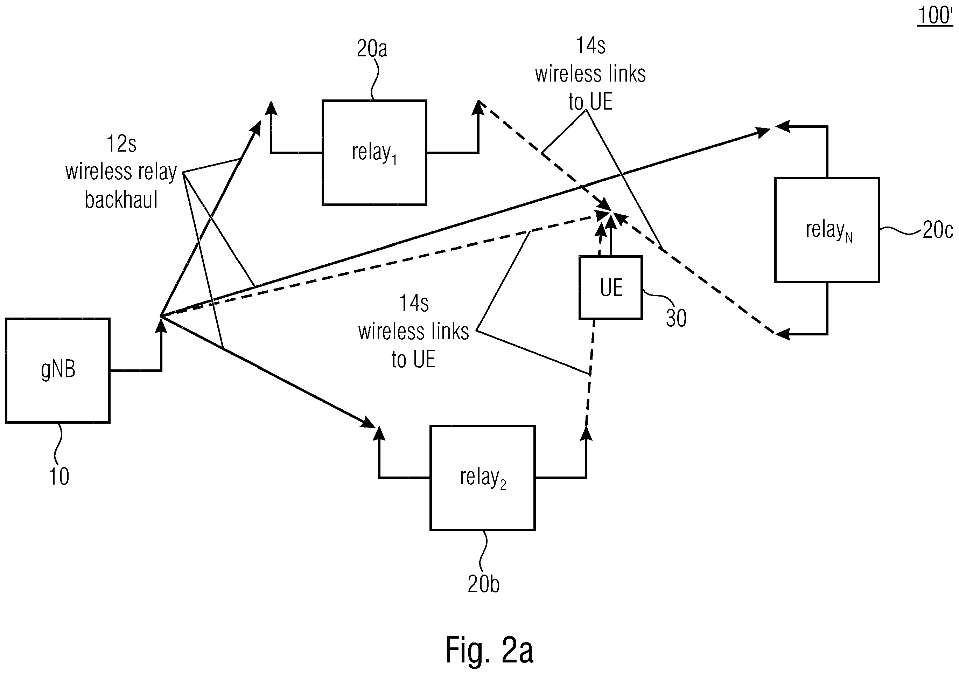

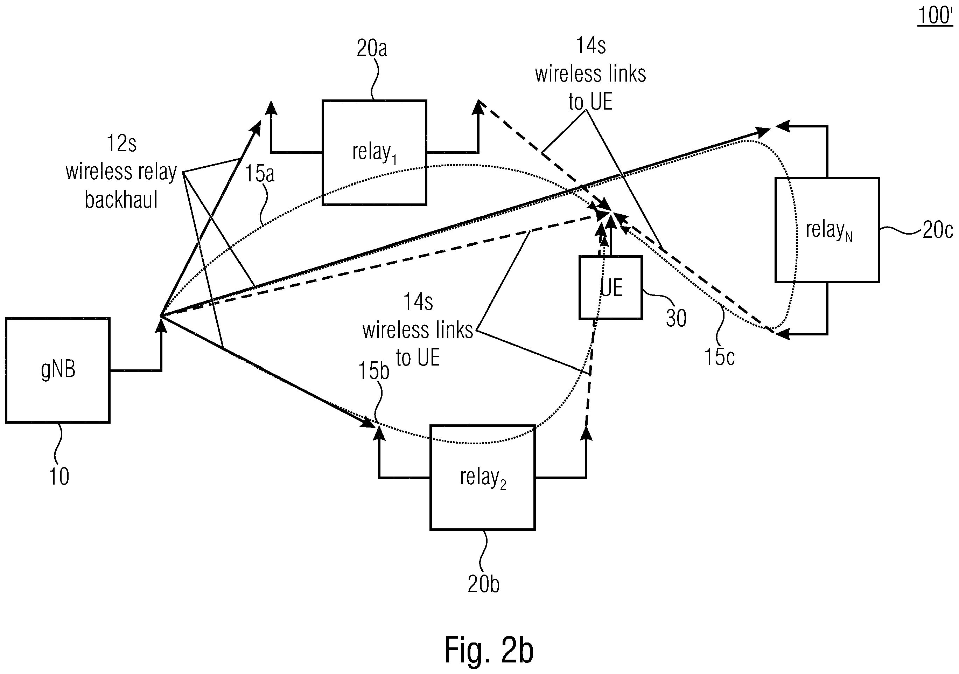

It should be noted, that the entities 44 and 46 are optional elements of the receiving unit. Below, different system setups and its influence to the propagation path will be discussed referring to Figs. 2a and 2b.

Fig. 2a, shows a system 100' having a base station 10 a user equipment 30 and a plurality of relays 20a, 20b, 20c. The communication signal (wireless relay backhaul) between the base station 10 and the relays 20a to 20c are marked by the reference numeral 12s, while the communication signals (wireless link to the UE) between the relays 20a and 20c and user equipment 30 are marked by the reference numeral 14s.

Also, UEs with accurate position information, e.g. from (differential) GNSS or RTK, may allow for measurements of the relay position. This may also result from a calibration procedure or a drive test. The resulting delay serve than as input to a RTT, TDOA, or a hybrid positioning engine. With, decaying hardware prices also the relays may be equipped with accurate GNSS receivers.

With regard to Fig. 2b showing the system 100', the three possible propagation paths 15a using the relay 20a, 15b using the relay 20b and 15c using the relay 20c are illustrated.

Given the time of transmission $T_0$, the Time of Arrivals (ToA) of the relayed signals via the relays 1,2,..., $N$ are indicated by

$$T_1 = \tau_{gNB-r1} + \tau_{r1} + \tau_{r1-UE} + T_0$$
$$T_2 = \tau_{gNB-r2} + \tau_{r2} + \tau_{r2-UE} + T_0$$
$$\vdots$$
$$T_N = \tau_{gNB-rN} + \tau_{rN} + \tau_{rN-UE} + T_0$$

Therein $\tau_m$ is the internal delay of the $n$-th relay and $\tau_{gNB-m}$ and $\tau_{rn-UE}$ are the propagation delays between the base station and the $n$-th relay respectively between the $n$-th relay and the UE.

Thus, the $N$ - 1 time differences arise

$$\Delta T_{12} = \tau_{gNB-r2} + \tau_{r2-UE} - \tau_{gNB-r1} - \tau_{r1-UE}$$
$$\vdots$$
$$\Delta T_{1N} = \tau_{gNB-rN} + \tau_{rN-UE} - \tau_{gNB-r1} - \tau_{r1-UE}$$

where it is assumed that the $\tau_{rn}$ are either equal (or very similar down to nanoseconds or even sub-nanosecond) or can be a matter of calibration. Also, the propagation delay of between the base station and the relays $\tau_{gNB\text{-}rN}$ remain constant and can, thus, be estimated and compensated against independently. So that the time differences can be reduced to

$$\Delta T'_{1n} = \tau_{rn-UE} - \tau_{r1-UE}$$

for all $n = 2 \ldots N$.

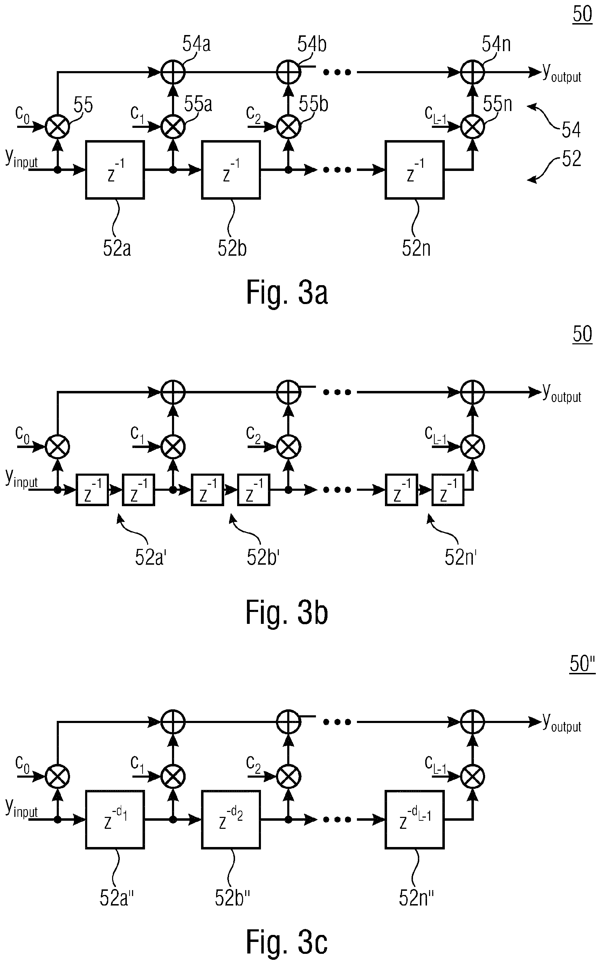

Below, with respect to Fig. 3a and Fig. 3c, a so-called relay channel filter will be discussed enabling imprinting a pattern according to a first approach. As already discussed above, the processor which comprises the relay channel filter of Fig. 3a, 3b or 3c performs the imprinting of the virtual channel on the forwarded data to output the convoluted signal. Here, a defined delay and sequence (defined impulse response) should be imprinted into the signal to be forwarded. A main example for the imprinted impulse response is a temporal pattern like a Hadamard/Walsh sequence [1, -1, 1, -1, 1,-1, 1, -1] with temporal spacing $T_s = 1/B$ ($B$ = OFDM signal bandwidth), that may be easily separated from orthogonal sequences like [1,1,-1,-1,-1,-1,1,1], [1,1,1,1,-1,-1,-1,-1], etc.

Longer codes allow for distinguishing more relays, even though short lengths of the code are preferred in order to limit the delay spread of the total impulse response that already increase due to AF relays. The channel impulse responses of lengths $n_{\text{bs-relay}}$ and $n_{\text{relay-ms}}$ equally contribute to the total impulse response i.e. the total length $n_{\text{total}} = n_{\text{bs-relay}} + n_{\text{relay-ms}} - 1$. Furthermore, if a relay imprints its own pattern - e.g. an AF relay - the resulting channel is a convolution of the channel of both hops plus the convolution with the imprinted channel. Hence, the total length is further increased

$$n_{\text{total,imp}} = n_{\text{bs-relay}} + n_{\text{relay}} + n_{\text{relay-ms}} - 2.$$

Potential sequences for the defined impulse response are Hadamard/Walsh, Gold codes, Kasami Codes or Zadoff-Chu sequences. The proposed code length depends on the code at hand: for Walsh sequence [2,4,8,16] are choices, Gold and Kasami codes have predefined lengths of $2^m - 1 = [3,7,15]$ (where m is the length of a generating shift registers), The sequence as such is not limited to sequences of consecutive pulses/signals using every sampling grid positions $\tau_n = 0, 1T_s, 2T_s, 3T_s, \ldots$

Fig. 3a shows a FIR tap model of the induced relay channel of length **L** for combining the inbound signal y input with the above-discussed sequences c. This FIR tap model 50 forms the above discussed relay channel filter may be subdivided into the two entities delay path 52 and combiner path 54. The delay path 52 comprises a plurality of delay elements 52a to 52n all connected in zeros, wherein the first delay element 52a receives the inbound signal y input. This inbound signal y input is forwarded and delayed by the plurality of delay elements 52a to 52n, wherein each delay element 52a to 52n has an output to the combiner path 54.

The combiner path 54 comprises a plurality of combiner elements 54a to 54n combining the delayed signals to a common signal output $y$ representing the convoluted signal. Here, the combiner path 54 or especially the combiner element 54a combines a non-delayed version of y input with a delayed version (output by 52a). The combiner path 54 further comprises combiner elements 55, 55a to 55n enabling to convolute the signal y input with the above-discussed sequence c. These elements 55, 55a to 55n are arranged between the delay path 52 and the (sum) elements 54a to 54n.

Based on such a FIR model, the processor 22 performs the convolution. According to further embodiments, the FIR model may differ. For example, the FIR model 50' of Fig. 3b may be used. Here, each delay element 52a', 52b' to 52n' is realized as double delay element. This means, that each delay element comprises two delay elements in series enabling to introduce a spacing of two.

Also, spacings of multiples of the sampling interval $\tau_n = nT_s = n/B$ between the artificial echo paths may be used if reasonable, e.g. employing the grid positions $\tau_n = 0, 2T_s, 4T_s, 6T_s, \ldots$. In this example only every 2nd input sample is used to create the artificial channel, but also larger numbers are feasible.

According to further embodiments, even an irregular (non-equidistant) spacing may be considered, e.g., having the grid positions $\tau_n = 0, 2T_s, 5T_s, 6T_s, 8T_s, \ldots$, as illustrated by Fig. 3c. Here, the delay element 52a" to 52n" are freely adjustable delay elements (according to the length $l - 1$ (sequence $d_l$).

The use of fractional time instances may also be used $\tau_n = 0, 1.5T_s, 3T_s, 4.5T_s, 6T_s, \ldots$, however it has the disadvantages of a significant oversampling in the relay and the UE, a larger processing effort and a bad separation of the paths during the correlation process for the relay sequence decreasing the detectability of the relay. The use of a varying, cyclic delay diversity may also be an idea that may prevent the increased length of the channel impulse response of the combined channels.

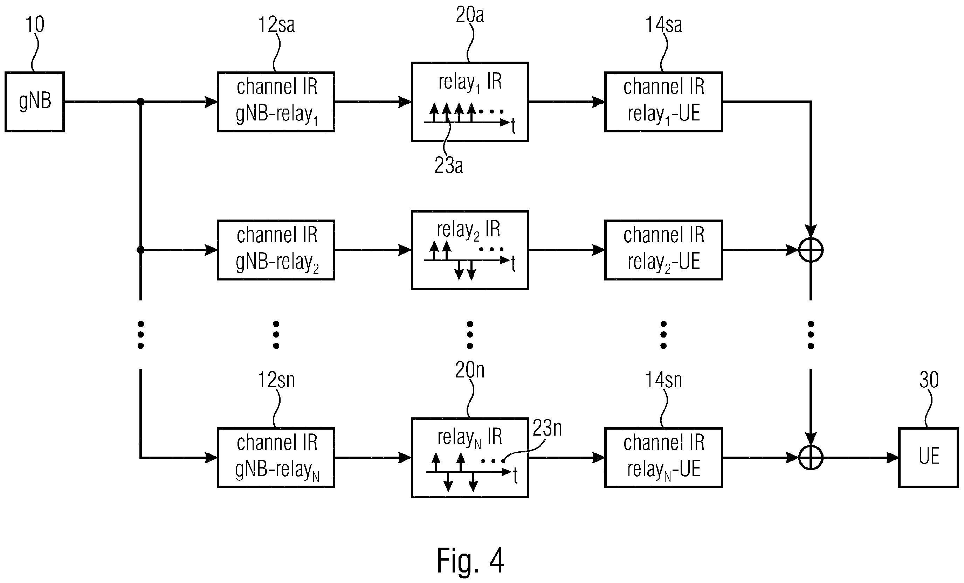

In connection with Fig. 4, the entire communication system will be discussed. Here, the base station 10 forwards different transmission signals to the relays 20a to 20n using the different channels 12sa to 12sn. The relays 20a to 20n forwards the inbound signal 12sa to 12sn using different patterns 23a to 23n using the outbound signals 14sa to 14sn, so that the user equipment 30 can receive the plurality of signals 14sa to 14sn.

The relays 20a to 20n may be equally stimulated by the base station 10 using a spatial pattern, i.e., orthogonal (as good as possible) beamforming from the antenna array of the base station 10 to the relays 20a to 20n. By this beamforming information individual to each relay 20a to 20n may already be encoded in the signal stream transmitted by the base station 10. In dense relay deployments this often fails as one beam will most probably be received by more than one relay 20a to 20n.

At the receiver, timing estimation can be performed by correlation either in the time or in the frequency domain (fast convolution) for both direct reception and reception via the relays 20a to 20n. Here a double convolution can be elegantly employed where first a PRS sequence correlator (in time or frequency) prepares the separation of the signal from multiple relays. Note, in general, the signals from multiple relays are asynchronously received. This breaks up the synchronicity of the imprinted artificial channels of multiple received relays (beyond what is acceptable). Thus, the orthogonality of the artificial relay channels (e.g. taken from a Hadamard/Walsh sequences) are destroyed: while the sequences [1,-1, 1,-1] and [1,1,-1,-1] are orthogonal, sequences as [1,-1,1,-1,0] and [0,1,1,-1,-1] are non-orthogonal in general.

An advantage of the proposed processing is that eventual data (that is true for data symbols and reference symbols) remains untouched and can be decoded or used (for RS) without knowledge of the relay at all, let alone the proposed processing in the relay. However, the selectivity of the channel is changed such that the general channel for the data is different and an additional fading results.

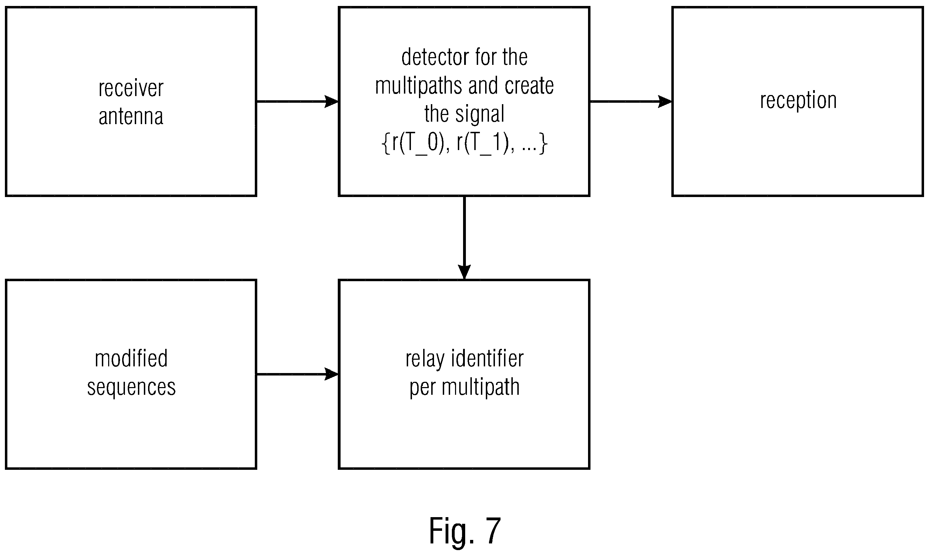

Fig. 7 shows an exemplary receiver implementation for relay signal separation. This receiver receives the signal output by the antenna of the base station (cf. reference numeral 10) forwarded by a relay 20 to the receiving unit antenna 40a, e.g., a user equipment antenna belonging to the front end of the user equipment 30. This signal is converted using the ADC 40ad and forwarded to a signal sequence correlator 42. This signal correlator assigns the receive signal to the respective relay sequence correlations 42a to 42n. After that, for each relay sequence correlation a time estimation of the direct path is performed using the timing estimator 44 (cf. reference numeral 44a to 44n). Based on this timing information for the different relay sequences, the positioning machine 46 performs the position determination of the receiver. As illustrated by the second input of the positioning entity 46, this may use further information, like DoA, ToA from other gNBs or RSSI. Since now the structure of the receiver has been discussed, its functionality will be discussed in detail.

Additionally, the scheme allows for superposing the signals from multiple relays covering the UE. More importantly, the signals may be separated again in the receiver (i.e. the UE or the gNB), although during the relay identification, the signals from the other relays are present, and have impact as detection and estimation noise (or more precisely interference). This may pose problems for the detection and false alarms and impact the estimation accuracy, especially, if near-far effects are considered. One way to reduce this is to use methods from BLAST (Bell Labs layered space time), multi-user detection (MUD) and non-orthogonal multi-user detection (NOMA), where, firstly, the strongest signal is detected, decoded, and estimated and then removed from the originally received signal, before the second strongest signal is considered, detected, and so on ...

The main task of timing estimation processing is to separate and extract the line of sight (LOS) path of the transmission of each relay. One means to do it is by correlation, where firstly the known signal sequence (e.g. a PRS) is decorrelated (despread) and afterwards the imprinted channel of the relays is detected (from the despread signal) again by means of the (de-)correlation with respect to the imprinted sequence.

This paragraph discusses the length of the channel impulse responses in order to validate the feasibility of the proposed locating.

- Relays are localized, i.e. relatively close to the UE, thus, the transmission between the relay and the UE experiences a relatively short channel impulse response at least if compared to the direct channel between gNB and the UE.
- A fixed relay is usually attached at a much larger height than street level, which reduces the amount of surrounding scatterers. Consequently, the transmission between the gNB and the relay experiences a relatively short channel (compared to the direct channel between gNB-UE). Scattering is further reduced if directed transmission and reception - this may be fixed or adaptive beamforming - for the relay-gNB link are used.

Depending on the available signal bandwidth, the symbol duration and respectively the maximum accuracy may be given as

- 20 MHz → 50 ns → 15 m
- 100 MHz → 10 ns → 3 m

This allows for having an idea of the level of synchronicity for the received signals from different relays and their impact on the signal detection.

- For instance, if a path delay differences of $\Delta d = 3$ $m$ is assumed for two relays, the IR sequence of the relay may use Hadamard/Walsh sequences at 20 MHz without great loss of accuracy of the time and position estimates.
- But at 100 MHz bandwidth, the sequences from different relays are not received at the same sampling time instance. Then Hadamard/Walsh sequences are not necessarily orthogonal anymore such that the separation of the signals may become less efficient and the remaining inter-relay interference will distort the signal and the estimation of the TOAs significantly. Then the theoretical achievable accuracy will be reduced.
- Note, this does not tell that, in this case, the error accuracy will be larger for the 100 MHz bandwidth then for the 20 MHZ bandwidth as the theoretical error variance or the root mean square error (RMSE) is much lower for the higher bandwidth. In fact, the Cramer Rao Lower Bound (CRLB) of the variance for unbiased timing estimates scale with the reciprocal of the square of the bandwidth $CRLB_{TOA} \sim 1/B^2$.

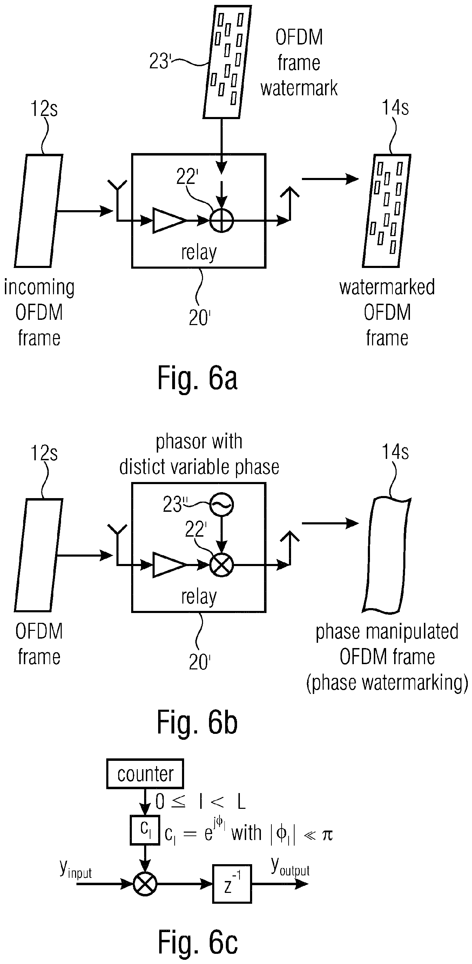

Referring to Figs. 6a, 6b and 6c, the watermarking will be discussed. Fig. 6a shows the relay 20' having a processor 22'. The relay 20 receives the incoming OFDM frame 12s using an antenna and forwards this incoming signal 12s to the processor 22'. Processor 22' receives this incoming signal 12s together with an OFDM frame watermark 23' and combines the two signals or, in more detail, embeds the watermark 23' into the inbound signal 12s to output the watermark OFDM frame 14s. This watermarking performed by the processor 22' is an alternative solution instead of imprinting an impulse response (artificial multipath). If the relay 20' can imprint a watermark in reference sequence (superposed strongly spread signal), then the base station 10 may also estimate the channel over a long period of time at least under the presumption of static relays and base stations. Then, the pilot signal may be extracted and pulled out of the low SINR (signal to interference and noise ratio) region by averaging over several frames (and users) or equivalently dispreading long pilot symbols (or reference symbols) sequences. This may help also for initial beamforming acquisition of the relay. It should be noted, that a plurality of watermarking processes can be used. Fig. 6a shows the preferred implementation of watermarking using a low power additive complex valued bitmap that is capable of exploiting averaging gain. Note that the addition 22' of the watermark 23' does need to be synchronized to the original incoming OFDM frame. Thus, an AF with relay needs to comprise a synchronization to the OFDM signal frames. For DF relays, the decoding requires a synchronization anyways, so that it can easily be applied when adding the watermark to the outgoing signal.

Another implementation is illustrated by Fig. 6b. Here, the processor 22' of the relay 20' uses a phasor with a distinct variable phase as watermark 23. In detail, the watermarking 23" is a deterministic phase jitter changing the phase according to a predefined sequence. The phase is then changed by a phase angle $\phi_l = \pm \phi_{ch} \ll \pi$ every $N_{const} \geq 1$ samples. With the size of $N_{const}$ and the phase jitter angle $\phi_n$ the detection performance can be steered. This kind of watermarking is also a multiplicative signal modification to be applied to a time-variant signal or a signal comprising OFDM-bins (m, k).

The detection may be done after decoding and remodulation. The detection of multiple relays may be difficult due to a more complicated correlation.

The phase watermarking relay without antenna and amplification is displayed in Fig. 6c The clocked watermarking sequence $c_l = e^{j\phi_l}$ has the length $L$, is based on the 2nd length $L$ sequence $\phi_l$ with all $|\phi_l| \ll \pi$, and is driven by a counter with output $l = 0,..., L - 1$. The delay element $z^{-1}$ is formally not needed, but a delay will result from (clocked) processing.

For OFDM transmissions the phase watermarking may also be applied by the relay in the frequency domain on the subcarrier symbols at the cost of requiring a DFT and IFFT (resp. FFT and IFFT) and an OFDM symbol synchronization in the relay.

A detection strategy for phase watermarking may be based on demodulating the time domain sequence (multiplication with the conjugate complex of the detected/decoded time domain symbols $\bar{y}_n = y_n \cdot x_n^*$) and then correlating the result with the different hypothesis $c_l^{(v)}$ for the relays $v = 1 ... N: \bar{y}_n \star c_n^{(v)}$.

An advantage of the relays compared to directly connected TRPs is that the relays may have a low transmit power which may help to limit interference and simplifies the power supply. Additionally, they are rather small and flexible in the deployment, i.e. in location and attachment.

We consider relay identification in a scenario where a signal transmitted from a transmitter is relayed to receivers via relays as shown in Figure 1 & 2. The relays employ watermarking for relay identification. Watermarking is the process of adding a "watermarking signal" at the relays and transmit the combination of the original (received) signal and the identification signal with the purpose of uniquely identifying the relay at the receiver.

When the relays are AF relays, the process may be mathematically modelled as follows. Let the signal transmitted by the transmitter be denoted by *s(t)*. At the *n*-th relay, let the received signal, corrupted by atmospheric effects and local noise (e.g. amplifiers, antennas, etc.), be denoted by $x_n(t)$. Note that $x_n(t)$ is assumed to be limited in time (or frequency) e.g. a positioning synchronization sequence. Typically, this signal would be re-transmitted after amplification with an amplification factor *A*. However, in case of watermarking, the amplified signal is added to a watermarking signal $c_n(t)$ (also appropriately amplified with an amplification factor B) resulting in the modified re-transmission signal $y_n(t)$, *n* = 1,···,*N*, as

$$y_n(t) = A_n x_n(t) + B_n c_n(t). \; \text{---- (W.1)}$$

At one of the receivers, the received signal, denoted by r(t) is given by

$$r(t) = \sum_{n=1}^{N} y_n(t) \; \text{--- (W.2)}$$

We now describe the process of construction and detection of the signals $c_n(t)$. (a) The signals $c_n(t)$ may be "in-band" or (b) an "out-of-band" added signals.

a) In in-band signalling, the signal $c_n(t)$ is superimposed on the original received signal $x_m(t)$ in time and frequency so that both signals occupy the same frequency band. The advantage of in-band signalling is that no additional frequency bands are need for the relay-to-receiver communication. The disadvantages are (1) the relay may require licensing to use the same frequency band, and (2) computationally complex successive decoding scheme may be employed at the receiver to extract both signals.

b) In out-of-band signalling, the signal $c_n(t)$ is superimposed on the original received signal $x_m(t)$ in time, however, $c_n(t)$ uses a second frequency band or guard band. The advantage of this scheme is (1) the second frequency band could be an unlicensed frequency band, and (2) separation in frequency might eliminate the need for the successive decoding scheme at the receiver. The disadvantage is (1) in case of using an unlicensed band, the watermarking signal is susceptible to interference, and (2) the receiver receives both frequency bands. In case of using guard frequency bands, some of the disadvantages are mitigated, however, the signal $c_n(t)$ might be tightly frequency controlled in order to avoid interference.

(b) The signal $c_n(t)$ are chosen so that they have "good separation properties." Typically, the good separation properties include low cross correlation across time and signals, i.e. $E[c_n(t)c_m^*(t+T)] = 0$ (or at least as low as possible), for all $n \neq m$, and $T >= 0$. This allows us to separate the signals $c_n(t)$ even, when they are overlapped. For examples of such sequences, kindly refer synchronization sequences, e.g. in LTE or WiFi.

(c) The watermarking signals $c_n(t)$ may also be periodically repeating versions of a signal of fixed (shorter) length denoted by $d_n(t)$.

(d) The amplification factors $A_n$ and $B_n$ may be chosen based on the characteristics of the relaying channel. For instance, if the link between the relays and the receiver allows the receiver to decode a weakly modulated signal, then amplification $B_n$ is weak.

Even though sequences with low cross correlation may be obtained across the signals, obtaining such signals across time as well, and maintaining the properties in the presence of noise and multi-path propagation is typically not possible. The absence of low cross correlation property results in degradation of the relay detection performance especially when the watermarking signals overlap (in time and/or frequency). In order to detect the signals despite the absence of low cross-correlation property, oblique projection based detection described below may be used. Oblique projection based detection allows a good separation if signals even if the cross-correlation is moderate, however, it might necessitate long signal sequences. It is, however, felt that that given the typical transmission burst size e.g. a WiFi packet or an LTE symbol, accommodating a long (in time) watermarking signal might not be a problem.

An example oblique projection based receiver receives a signal *r(t)* and identifies the multi-path signals using synchronization sequences embedded in the signal *s(t)*. Let the multi-path signals be at time instances $T_0$, $T_1$, ... Each of the multi-path is assumed to be originating from the relays for simplicity, although the scheme may be easily extended to avoid multi-paths originating from the transmitter itself. Therefore, each of the multi-path is due to one or more relays.

The signals $\{r(T_0),r(T_1),...\}$ are now used for relay identification. Note that in case of out-of-band signalling, only the relevant frequency band or guard band is used for identification.

For the set of relay signals $\{c_n(t)\}$, oblique projection based modified signals, denoted by $\{d_n(t)\}$ are constructed (described below) and are used for correlation with $\{r(T_0),r(T_1),...\}$. When a correlation between modified sequences and $r(T_N)$ is found, the corresponding relays are identified with the path $T_N$.

Generation of the modified sequences:

1. The general theory of oblique projection is given in [3].
2. The method to generate these sequences is along the lines of the patent [4] (which generates these sequences in frequency domain) but in the current scheme, the sequences are equally generated in time domain.

Here, the duration of these sequences itself can be used for identifying the relay as discussed above.

An example overview of the modified sequence generation is given below.

Let $\{c_n(k)\}$ denote a set of appropriately sampled and quantized versions of $\{c_n(t)\}$ that is amenable to digital processing. Construct a matrix **C** as follows: construct a first matrix containing the samples $c_n(k)$, $k = 1 \ldots L_n$, where $L_n$ is the length of the $n$-th sequence, along the $N$ columns. Next, we extend this matrix with the time shifted versions of $c_n(k)$ for the (required) amounts of lags $T_L$ i.e. the maximum expected delay between the paths. Note that $(T_L + 1) \cdot N$ is preferably be less than or equal to any $L_n$, i.e. if we want more lags, then we want longer sequences. This extended matrix is denoted as $C$. Construct the matrix **S** = pinv(**C**), where pinv(**X**) denotes the pseudo-inverse of **X**. The first $N$ rows of the matrix **S** are the modified sequences $d_n(t)$.

Next, we describe the process at the relays and at the receiver.

At the N relays, the received signal (e.g. a synchronization signal for positioning $s(t)$) is identified and a watermarking signal, as described above, is superimposed. The watermarking signal is unique for every relay in the system. Next, the superimposed signal is transmitted to the receiver.

At the receiver, as shown in the figure below, the signals received from each relay appear as multi-path versions of the originally transmitted signal, i.e., the operation of the relay appears transparent except for the watermarking signals. The individual multi-paths are detected using a conventional synchronization algorithm based on the synchronization signal $s(t)$.

A list of possible (strong) synchronization points (in terms of reception time instances) is extracted from the received signal sequence. This is denoted in the block titled "Detector for the Multipaths and create..." where $T_0, T_1, \ldots$ are the synchronization points as described above. For each synchronization point, the corresponding sequences may be obtained by correlating with all possible sequences $d_n(t)$ and choosing the sequence(s) with the strongest correlation. (Note that more than one sequence may be associated with a particular synchronization point.)

Once the sequences with the strongest correlation for a dedicated synchronization point are obtained. Then the related relay number is read out as the index of the modified sequence $d_{\tilde{n}}(t)$, where $\tilde{n}$ is the index of one of the sequences with the strongest correlation. (Note that there's a bijective mapping between sequences $c_n(t)$ and $d_n(t)$.) This process is denoted in the block titled "Relay Identifier per multipath" which obtains the modified sequences $d_n(t)$ as input for correlation. Next, the watermarking signals are eliminated from the original signal either through interference cancellation or through filtering (in case of out of band watermarking signal) and the rest of the signal is processed in a conventional fashion. The identified relays may be used to improve the reception performance.

This process is delineated by the diagram of Fig. 7.

Although within above embodiments, the receiving unit has been discussed as part of the user equipment (context downlink), it should be noted that the receiving unit may also be part of a base station. The principle for using a receiving unit as part of a base station is the same (context uplink), since a transmission time estimator can determine the transmission time just from another point of view, wherein this transmission time can also be used for the position determination. For the uplink different reference signals, like the SRS or DMRS may be used.

According to another aspect of the invention, the relay may be used in a cellular network, like LTE or NR as inherent TBS beacon station.

TBS means terrestrial beacon system and represents an encapsulated (within the network) ground based navigation solution employing relatively simple infrastructure beacon transmitters. In principle, the same is true for any external TBS (e.g. from NEXTNAV) as specified within the LTE specification since the 3GPP Release 13 within the LTE positioning protocol (LPP) protocol [5].

- Relays may replace the somehow unpopular TBS TP (for the terrestrial beacon system transmit point, earlier called LTU [2]). The TP (or beacons) transmit their individual positioning reference signal (PRS) sequence (according to their cell identifier, a time index, etc.). The UE can then determine received signal time differences (RSTD) between the signals from multiple TBS TP. The TBS TP can then be used as anchor points for the TDOA locating algorithm in the UE (if the positions are known) or in a location server where the TBS TP positions are stored. This has the purpose to improve SINR for the data transmission. In the 3GPP standards this is known as observed TDOA (OTDOA).

- Note that the use of identifiable relays helps to remove the unsolved issue of the network synchronization of the TBS TP as the relay receives its synchronization continuously via the relay backhaul (i.e. the wireless fronthaul of the gNB) anyway.
- The result may be a full-blown relay for all local signals of the mobile cellular network or a relay that solely forwards the altered PRS sequences according to the processes described above as received from the core network via the wireless fronthaul.

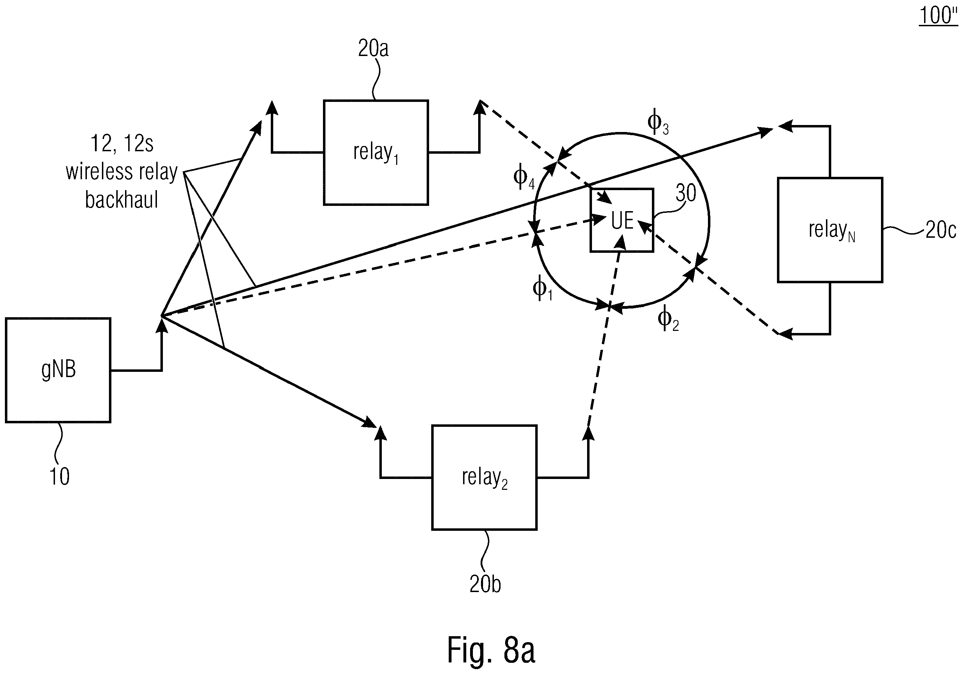

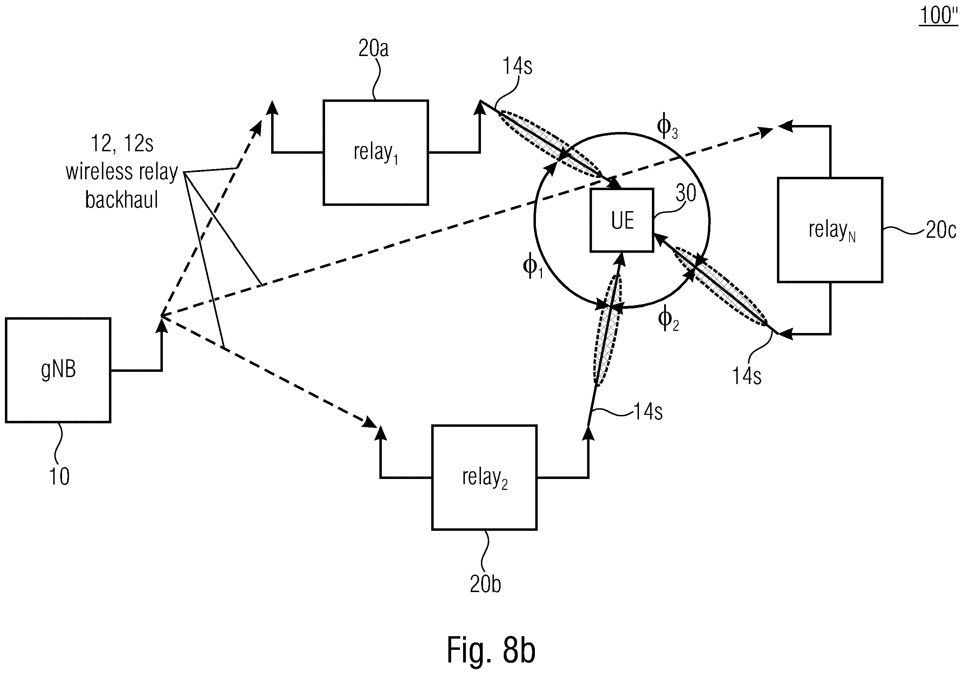

Fig. 8a and 8b illustrated the system 100" which is substantially comparable to the system. Consequently, the system 100" comprises the base station 10, the user equipment 30 and a plurality of relays 20a, 20b, 20c. As illustrated by the angles $phi_1$ to $phi_4$ the receiver of the user equipment is configured to perfume beamforming in order to separate the different signals 14s from the three relays 20a to 20c. Note, that the receiver of the user equipment typically uses a plurality of antennas to perfume beamforming. The focusing of the receipt angle $phi_1$, $phi_2$ $phi_3$ is illustrated by Fig. 8b. This approach enables beneficially to separate different signals from different relays 20a to 20c. Furthermore, the receiver can use the beamforming for performing DoA association / estimation and/or ToA association / estimation with / to a respective relay of the relays 20a- 20c.

Although some aspects have been described in the context of an apparatus, it is clear that these aspects also represent a description of the corresponding method, where a block or device corresponds to a method step or a feature of a method step. Analogously, aspects described in the context of a method step also represent a description of a corresponding block or item or feature of a corresponding apparatus. Some or all of the method steps may be executed by (or using) a hardware apparatus, like for example, a microprocessor, a programmable computer or an electronic circuit. In some embodiments, some one or more of the most important method steps may be executed by such an apparatus.

Depending on certain implementation requirements, embodiments of the invention can be implemented in hardware or in software. The implementation can be performed using a digital storage medium, for example a floppy disk, a DVD, a Blu-Ray, a CD, a ROM, a PROM, an EPROM, an EEPROM or a FLASH memory, having electronically readable control signals stored thereon, which cooperate (or are capable of cooperating) with a programmable computer system such that the respective method is performed. Therefore, the digital storage medium may be computer readable.

Some embodiments according to the invention comprise a data carrier having electronically readable control signals, which are capable of cooperating with a programmable computer system, such that one of the methods described herein is performed.

Generally, embodiments of the present invention can be implemented as a computer program product with a program code, the program code being operative for performing one of the methods when the computer program product runs on a computer. The program code may for example be stored on a machine readable carrier.

Other embodiments comprise the computer program for performing one of the methods described herein, stored on a machine readable carrier.

In other words, an embodiment of the inventive method is, therefore, a computer program having a program code for performing one of the methods described herein, when the computer program runs on a computer.

A further embodiment of the inventive methods is, therefore, a data carrier (or a digital storage medium, or a computer-readable medium) comprising, recorded thereon, the computer program for performing one of the methods described herein. The data carrier, the digital storage medium or the recorded medium are typically tangible and/or non-transitionary.

A further embodiment of the inventive method is, therefore, a data stream or a sequence of signals representing the computer program for performing one of the methods described herein. The data stream or the sequence of signals may for example be configured to be transferred via a data communication connection, for example via the Internet.

A further embodiment comprises a processing means, for example a computer, or a programmable logic device, configured to or adapted to perform one of the methods described herein.

A further embodiment comprises a computer having installed thereon the computer program for performing one of the methods described herein.

A further embodiment according to the invention comprises an apparatus or a system configured to transfer (for example, electronically or optically) a computer program for performing one of the methods described herein to a receiver. The receiver may, for example, be a computer, a mobile device, a memory device or the like. The apparatus or system may, for example, comprise a file server for transferring the computer program to the receiver.

In some embodiments, a programmable logic device (for example a field programmable gate array) may be used to perform some or all of the functionalities of the methods described herein. In some embodiments, a field programmable gate array may cooperate with a microprocessor in order to perform one of the methods described herein. Generally, the methods are preferably performed by any hardware apparatus.

The above described embodiments are merely illustrative for the principles of the present invention. It is understood that modifications and variations of the arrangements and the details described herein will be apparent to others skilled in the art. It is the intent, therefore, to be limited only by the scope of the impending patent claims and not by the specific details presented by way of description and explanation of the embodiments herein.

References

[1] Bruce L. Davis, Geoffrey B. Rhoads (Digimark Corp), "WO 2001001331 A1, Digital watermarks in TV and radio broadcasts", WIPO patent application, priority date: June 28, 1999.

[2] Sven Fischer (QualComm), "US20170288830 A1, PRS-based Terrestrial Beacon System Implementation", United States Patent Application, Priority, December 9, 2016

[3] Signal processing applications of oblique projection operators, https://ieeexplore.ieee.org/document/286957/.

[4] Filed patent by Ericsson: https://patents.google.com/patent/WO2016078724A1/en (Note: contact Aravindh Krishnamoorthy for details.)

[5] 3GPP TS 36.355 "Evolved Universal Terrestrial Radio Access (E-UTRA); LTE Positioning Protocol (LPP); Release 13".

**Claims**

1. A relay (20, 20') for forwarding a signal stream (12), the relay (20, 20') having an ID and comprising:

   a receiver (12r) configured to receive an inbound signal (12s) comprising the signal stream (12);
   a processor (22) configured to imprint a pattern (23) to the inbound signal (12s) by generating a convoluted or watermarked signal; and
   a transmitter (20t) configured to transmit the convoluted or watermarked signal as outbound signal (40s);
   wherein the pattern (23) is assigned to the ID of the relay (20, 20').

2. The relay (20, 20') according to claim 1, wherein the processor (22) is configured to imprint the pattern (23) by convoluting the inbound signal (12s) in accordance to a predefined delay and predefined sequence.

3. The relay (20, 20') according to claim 2, wherein the processor (22) comprises a relay channel filter (50, 50', 50") comprising a delay chain (52) and a combiner path (54);
   the delay chain (52) comprising a plurality of delay elements (52a to 52n, 52a' to 52n', 52a" to 52n") each configured to delay the inbound signal (12s), the combiner path (54) is configured to combine the delayed signals so as to output the convoluted or watermarked signal.

4. The relay (20, 20') according to claim 3, wherein the combiner path (54) comprises a first plurality of first combiner elements (55, 55a to 55n) coupled to respective outputs of the delay elements (52a to 52n, 52a' to 52n', 52a" to 52n"), wherein each combiner element is configured to combine the delayed signals with the sequence or a part of the sequence; and/or
   wherein the combiner path (54) comprises a second plurality of second combiner elements (54a to 54n) coupled to the outputs of the delay elements (52a to 52n, 52a' to 52n', 52a" to 52n") and configured to combine all delayed signals of the plurality of delay elements (52a to 52n, 52a' to 52n', 52a" to 52n") to the convoluted or watermarked signal or to combine all delayed signals of the plurality of delay elements (52a to 52n, 52a' to 52n', 52a" to 52n") and a non-delayed version of the inbound signal (12s) to the convoluted or watermarked signal.

5. The relay (20, 20') according to claim 3 or 4, wherein the delay elements (52a to 52n, 52a' to 52n', 52a" to 52n") are arranged in series and wherein the combiner path (54) connects all outputs of the delay elements (52a to 52n, 52a' to 52n', 52a" to 52n") to a common output of the relay channel filter (50, 50', 50").

6. The relay (20, 20') according to claim 1, wherein the processor (22) is configured to imprint the pattern (23) by adding a watermark (23', 23") to the inbound signal (12s).

7. The relay (20, 20') according to claim 6, wherein the watermark (23', 23") comprises a predefined bitmap, a periodically repeated predefined bitmap and/or a low power complex valued bitmap; and/or wherein the adding of the watermark (23', 23") is performed according to the following formula: $y_n(k,m) = A_n x_n(k,m) + B_n c_n(k,m)$, wherein $y_n(k,m)$ is the convoluted or watermarked signal, $x_n(k,m)$ is the inbound signal (12s), $c_n(k,m)$ is the watermark (23', 23"), $A_n$ is an amplification factor for the inbound signal (12s) $y_n(k,m)$ and $B_n$ is an amplification factor for the watermark (23', 23") $c_n(t)$, wherein n is the number of the relays (20, 20') and wherein k is a frequency or subcarrier and m is symbol in a time domain.

8. The relay (20, 20') according to claim 6, wherein the watermark (23', 23") comprises a deterministic phase jitter or a watermark (23', 23") according to $A_n d_n(t) x_n(t)$ with $A_n$ is an amplification factor, $x_n(t)$ the inbound signal (12s), $d_n(t)$ = $\exp(j\phi_n)$, and/or wherein adding a watermark (23', 23") comprises changing the phase and/or wherein adding a watermark (23', 23") comprises changing the phase by a phase angle $\phi_l = \pm\phi_{ch} \ll \pi$; and/or
wherein the watermark (23', 23") is a clocked watermark sequence and/or wherein the watermark (23', 23") is a clocked watermark sequence $c_l = e^{j\phi l}$ with $e \ll \pi$.

9. A method for forwarding a signal stream (12) using a relay (20, 20') having an ID, the method comprises the following steps:

   receiving an inbound signal (12s) comprising a signal stream (12);
   imprinting a pattern (23) to the inbound signal (12s) by generating a convoluted or watermarked signal; and
   transmitting the convoluted or watermarked signal as outbound signal (40s),
   wherein the pattern (23) is assigned to the ID of the relay.

10. The method according to claim 9, wherein the step of imprinting the pattern (23) comprises adding a watermark (23', 23") to the inbound signal (12s).

11. A detecting receiving unit (40) of a user equipment or base station, the detecting receiving unit (40) comprising:

    a receiver (40r) configured to receive an inbound signal (14s) comprising a stream from a relay, wherein a pattern (23) was imprinted to the inbound signal (14s) and wherein the pattern (23) is assigned to an ID of the relay;
    a pattern decorrelator (42) configured to analyze the inbound signal (14s) so as to decorrelate the imprinted pattern (23);
    wherein the pattern decorrelator (42) is configured to identify the relay based on the detected imprinted pattern (23).

12. The detecting receiving unit (40) according to claim 11, wherein the pattern (23) is a known pattern (23).

13. The detecting receiving unit (40) according to one of claims 11 to 12, wherein the pattern decorrelator (42) is configured to perform a demodulating of a time domain sequence of the inbound signal (14s) and to correlate results of the demodulating with different hypothesis $c_l^{(v)}$ for the relays $v = 1 ... N$ to detect the imprinted pattern (23); and/or wherein the pattern decorrelator (42) is configured to detect the imprinted pattern (23) by determine a periodically repeated watermark (23', 23"); and/or
wherein the pattern decorrelator (42) is configured to perform oblique projection to detect the imprinted pattern (23).

14. The detecting receiving unit (40) according to one of claims 11 to 13, wherein the pattern decorrelator (42) is configured to identify the line of sight of the signal forwarded by the relay (20, 20') and received as inbound signal (14s) from the relay (20, 20').

15. The detecting receiving (40) unit according to one of the claims 11 to 14, wherein the detecting receiving unit (40) comprises a receiving time estimator (44) configured to estimate the transmission time between the relay (20, 20') and the detecting receiving unit (40) by separating a transmission time between the relay (20, 20') and the detecting receiving unit (40) from an entire transmission time of a signal forwarded by the relay (20, 20') and received as the inbound signal (12s) from the relay (20, 20').

16. The detecting receiving unit (40) according to claim 15, wherein the receiving time estimator (44) performs the estimation based on a frequency, a time and/or a combination thereof.

**17.** The detecting receiving unit (40) according to one of claims 15 to 16, wherein the detecting receiving unit (40) comprises a positioning estimator configured to determine based on the transmission time between the relay (20, 20') and the detecting receiving unit (40) a position of the detecting receiving unit (40).

**18.** The detecting receiving unit (40) according to one of claims 1 1 to 17, wherein the detecting receiving unit (40) comprises multiple receive antennas connected to the receiver, wherein the receiver is configured to separate at least two LOS path of at least two relays by beamforming.

**19.** The detecting receiving unit (40) according to claim 18, wherein the receiver is configured for a DoA association and/or a ToA association with a respective relay of the least two relays.

**20.** A method for receiving a signal by a user equipment or base station, the method comprises the steps:

receiving an inbound signal (14s) from a relay (20, 20') comprising a signal stream (14), wherein a pattern (23) was imprinted to the inbound signal (14s) and wherein the pattern (23) is assigned to an ID of the relay (20, 20'); analyzing the inbound signals (14s) so as to decorrelate and detect the imprinted pattern (23); and identifying the relay (20, 20') using the detected imprinted pattern (23) assigned to the ID of the relay (20, 20').

**21.** A computer program having a program code for performing the method according to claim 9 or 20.

**22.** Using the relay (20, 20') according to one of the claims 1 to 8 as TBS beacon station.

**23.** Communication system comprising at least the relay (20, 20') according to one of the claims 1 to 8 and at least the detecting receiving (40) unit according to one of the claims 11 to 19 implemented in a user equipment and/or a base station.

**24.** The relay (20, 20') according to one of the claims 1 to 8 that is configured to detect a transmitted PRS-signal or to analyze the signal stream (12) regarding the PRS-signal so as to determine a position of the PRS and/or that is configured to imprint the pattern (23) to the PRS-signal.

EP 3 609 093 A1

Fig. 1a

Fig. 1b

Fig. 1c

Fig. 2a

Fig. 2b

Fig. 3a

Fig. 3b

Fig. 3c

Fig. 4

EP 3 609 093 A1

Fig. 5

23' — OFDM frame watermark

12s

22'

14s

relay

20'

incoming OFDM frame

watermarked OFDM frame

Fig. 6a

12s

phasor with distict variable phase

23''

22'

14s

relay

20'

OFDM frame

phase manipulated OFDM frame (phase watermarking)

Fig. 6b

counter

$0 \leq l < L$

$c_l$    $c_l = e^{j\phi_l}$ with $|\phi_l| \ll \pi$

$y_{input}$

$z^{-1}$

$y_{output}$

Fig. 6c

```
┌─────────────────┐      ┌─────────────────────┐      ┌─────────────────┐
│                 │      │   detector for the  │      │                 │
│    receiver     │ ───► │  multipaths and create │ ──► │    reception    │
│    antenna      │      │     the signal      │      │                 │
│                 │      │  {r(T_0), r(T_1), ...} │      │                 │
└─────────────────┘      └─────────────────────┘      └─────────────────┘
                                    │
                                    ▼
┌─────────────────┐      ┌─────────────────────┐
│                 │      │                     │
│    modified     │ ───► │   relay identifier  │
│    sequences    │      │    per multipath    │
│                 │      │                     │
└─────────────────┘      └─────────────────────┘
```

Fig. 7

Fig. 8a

Fig. 8b

EP 3 609 093 A1

Europäisches
Patentamt

European
Patent Office

Office européen
des brevets

# EUROPEAN SEARCH REPORT

Application Number

EP 18 00 0665

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2004/166873 A1 (SIMIC EMILIJA [US] ET AL) 26 August 2004 (2004-08-26)<br>* paragraph [0003] - paragraph [0011] *<br>* paragraph [0014] *<br>* paragraph [0085] - paragraph [0129] *<br>* figures 3-6 * | 1-24 | INV.<br>H04B7/14 |
| X | US 2004/165657 A1 (SIMIC EMILIJA [US] ET AL) 26 August 2004 (2004-08-26)<br>* paragraph [0003] - paragraph [0011] *<br>* paragraph [0014] - paragraph [0019] *<br>* paragraph [0098] - paragraph [0131] *<br>* figures 3-6 * | 1-24 | |
| X | US 2006/030262 A1 (ANDERSON JON JAMES [US] ET AL) 9 February 2006 (2006-02-09)<br>* paragraph [0001] - paragraph [0009] *<br>* paragraph [0024] *<br>* paragraph [0034] - paragraph [0050] *<br>* figure 2 * | 1-10,21, 22,24 | |
| A | WO 2005/069807 A2 (INTERDIGITAL TECH CORP [US]; OLESEN ROBERT LIND [US]; CHITRAPU PRABHAK) 4 August 2005 (2005-08-04)<br>* paragraph [0003] *<br>* paragraph [0011] *<br>* paragraph [0022] *<br>* paragraph [0025] - paragraph [0032] *<br>* paragraph [0059] - paragraph [0079] *<br>* figures 3-6 * | 1-24 | TECHNICAL FIELDS SEARCHED (IPC)<br><br>H04B |

-/--

The present search report has been drawn up for all claims

| Place of search | Date of completion of the search | Examiner |
|---|---|---|
| Munich | 24 January 2019 | Marzenke, Marco |

EPO FORM 1503 03.82 (P04C01)

page 1 of 2

| Europäisches Patentamt European Patent Office Office européen des brevets | **EUROPEAN SEARCH REPORT** | Application Number EP 18 00 0665 |
| --- | --- | --- |

## DOCUMENTS CONSIDERED TO BE RELEVANT

| Category | Citation of document with indication, where appropriate, of relevant passages | Relevant to claim | CLASSIFICATION OF THE APPLICATION (IPC) |
| --- | --- | --- | --- |
| A | SUNG IK PARK ET AL: "An Efficient Receiver Structure for Robust Data Transmission using TxID Signal in the ATSC DTV System", IEEE TRANSACTIONS ON CONSUMER ELECTRONICS, IEEE SERVICE CENTER, NEW YORK, NY, US, vol. 56, no. 2, 1 May 2010 (2010-05-01), pages 408-414, XP011312683, ISSN: 0098-3063 * page 408 - page 412 * ----- | 1-24 | |
| A | FENG YANG ET AL: "Transmitter Identification With Watermark Signal in DVB-H Signal Frequency Network", IEEE TRANSACTIONS ON BROADCASTING, IEEE SERVICE CENTER, PISCATAWAY, NJ, US, vol. 55, no. 3, 1 September 2009 (2009-09-01), pages 663-667, XP011343518, ISSN: 0018-9316, DOI: 10.1109/TBC.2009.2025840 * page 663 - page 664 * ----- | 1-24 | TECHNICAL FIELDS SEARCHED (IPC) |

The present search report has been drawn up for all claims

| Place of search | Date of completion of the search | Examiner |
| --- | --- | --- |
| Munich | 24 January 2019 | Marzenke, Marco |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 18 00 0665

This annex lists the patent family members relating to the patent documents cited in the above-mentioned European search report.
The members are as contained in the European Patent Office EDP file on
The European Patent Office is in no way liable for these particulars which are merely given for the purpose of information.

24-01-2019

| Patent document cited in search report | | Publication date | Patent family member(s) | | Publication date |
|---|---|---|---|---|---|
| US 2004166873 | A1 | 26-08-2004 | BR | PI0407767 A | 18-04-2006 |
| | | | CA | 2516771 A1 | 10-09-2004 |
| | | | EP | 1597843 A1 | 23-11-2005 |
| | | | JP | 4382805 B2 | 16-12-2009 |
| | | | JP | 2006518974 A | 17-08-2006 |
| | | | US | 2004166873 A1 | 26-08-2004 |
| | | | WO | 2004077698 A1 | 10-09-2004 |
| US 2004165657 | A1 | 26-08-2004 | AT | 485638 T | 15-11-2010 |
| | | | AU | 2004214826 A1 | 10-09-2004 |
| | | | BR | PI0407766 A | 01-03-2006 |
| | | | CA | 2516772 A1 | 10-09-2004 |
| | | | EP | 1597844 A1 | 23-11-2005 |
| | | | EP | 2251991 A2 | 17-11-2010 |
| | | | HK | 1092608 A1 | 15-10-2010 |
| | | | JP | 4382806 B2 | 16-12-2009 |
| | | | JP | 2006518977 A | 17-08-2006 |
| | | | KR | 20050101563 A | 24-10-2005 |
| | | | RU | 2335849 C2 | 10-10-2008 |
| | | | US | 2004165657 A1 | 26-08-2004 |
| | | | WO | 2004077699 A1 | 10-09-2004 |
| US 2006030262 | A1 | 09-02-2006 | BR | PI0513814 A | 13-05-2008 |
| | | | KR | 20070039156 A | 11-04-2007 |
| | | | US | 2006030262 A1 | 09-02-2006 |
| | | | WO | 2006022978 A1 | 02-03-2006 |
| WO 2005069807 | A2 | 04-08-2005 | AR | 047860 A1 | 01-03-2006 |
| | | | CA | 2553215 A1 | 04-08-2005 |
| | | | EP | 1704694 A2 | 27-09-2006 |
| | | | JP | 4393522 B2 | 06-01-2010 |
| | | | JP | 2007529167 A | 18-10-2007 |
| | | | KR | 20060103291 A | 28-09-2006 |
| | | | KR | 20060113771 A | 02-11-2006 |
| | | | TW | I271982 B | 21-01-2007 |
| | | | TW | 200629857 A | 16-08-2006 |
| | | | TW | 200943899 A | 16-10-2009 |
| | | | US | 2005220322 A1 | 06-10-2005 |
| | | | WO | 2005069807 A2 | 04-08-2005 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2001001331 A1
- US 20170288830 A1

- WO 2016078724 A1

**Non-patent literature cited in the description**

- Evolved Universal Terrestrial Radio Access (E-UTRA); LTE Positioning Protocol (LPP); Release 13. *3GPP TS 36.355*